# DEMANDE DE BREVET EUROPEEN

(11) **EP 2 957 410 A1**
(43) Date de publication de la demande: **23.12.2015**
(21) Numéro de dépôt: 15172910.0
(22) Date de dépôt: 19.06.2015
(51) Int. Cl.: B29C 45/44, B29C 45/26, B29C 33/48, B29L 1/00, B65D 41/00, B29L 31/56, B29C 45/33

(54) **SYSTÈME À NOYAUX RÉTRACTABLES POUR LE MOULAGE DE PIÈCES**

(30) Priorité: 19.06.2014 FR 1455663
(71) Demandeur: Infiplast, 01100 Oyonnax (FR)
(72) Inventeur: BOULETTE SCOLA, Philippe, 01100 Bellignat (FR); CIESLAK, Frédéric, 01500 Ambérieu en Bugey (FR); REVAUX, Stéphane, 01100 Oyonnax (FR)
(74) Mandataire: Verriest, Philippe

(57) **Abrégé**

Système à noyaux rétractables (1) pour le moulage de pièces comprenant une partie centrale (7), un ensemble de parties latérales (9) pourvues de portions de moulage (17) attenantes, l'ensemble de parties latérales (9) comprenant une partie latérale d'un premier type (9a) agencée pour coopérer avec la partie centrale (7) selon une première direction de coopération oblique par rapport à l'axe central (5) entre une position de moulage et une position rétractée ; l'ensemble de parties latérales (9) comprenant une partie latérale d'un deuxième type (9b) agencée pour être mobile en translation selon une deuxième direction de coopération transversale à l'axe central (5).

## Description

La présente invention concerne un système à noyaux rétractables pour le moulage de pièces, notamment le moulage de pièces par injection de matière thermoplastique.

Il est connu d'utiliser des systèmes à noyaux rétractables permettant de retirer les noyaux après le moulage d'une pièce dans un moule. La pièce peut ensuite être éjectée ou retirée du moule.

Pour ce faire, il est nécessaire de disposer d'un noyau comprenant plusieurs parties latérales attenantes agencées pour être déplacés entre une position de moulage et une position rétractée.

Pour permettre le passage de la position de moulage à la position rétractée, il est également connu de déplacer une partie seulement de l'ensemble des parties latérales dans un premier temps, puis le reste des parties latérales de la position de moulage à la position rétractée. Cette disposition est particulièrement intéressante lorsque les parties latérales s'étendent selon un contour fermé.

Des systèmes mécaniques permettent de réaliser de tels déplacements de manière décalée. Ils s'avèrent compliqués à mettre en oeuvre car ils nécessitent de disposer des pièces agencées pour être déplaçables les unes par rapport aux autres.

Des jeux fonctionnels doivent également être prévus entre les pièces de ce système mécanique pour permettre les déplacements des parties latérales.

Il apparait donc comme délicat de prévoir à la fois une géométrie des pièces du système permettant un positionnement précis des parties latérales notamment en position de moulage et d'autre part de prévoir des jeux fonctionnels permettant le déplacement décalé des parties latérales.

La présente invention vise à résoudre tout ou partie des inconvénients mentionnés ci-dessus. Elle permet de garantir une meilleure précision ainsi qu'une meilleure répétabilité dans la géométrie de la pièce obtenue, notamment au niveau de la cote départ filet, distance entre la face d'appui supérieure et le départ du filet, et au niveau de la cylindricité du diamètre intérieur sur filet.

A cet effet, la présente invention concerne un système à noyaux rétractables pour le moulage de pièces, notamment des pièces injectées en matière thermoplastique, comprenant une partie centrale.

Le système à noyaux rétractables comprend également un ensemble de parties latérales pourvues de portions de moulage attenantes agencées pour engendrer un motif moulé continu sur une pièce autour d'un axe central, les parties latérales étant agencées pour être mobiles entre une position de moulage et une position rétractée par rapport à la partie centrale et étant disposées autour de la partie centrale en position de moulage.

L'ensemble de parties latérales comprend une partie latérale d'un premier type agencée pour coopérer avec la partie centrale selon une première direction de coopération oblique par rapport à l'axe central entre une position de moulage et une position rétractée.

L'ensemble de parties latérales comprend une partie latérale d'un deuxième type agencée pour être mobile en translation par rapport à la partie centrale selon une deuxième direction de coopération entre une position de moulage et une position rétractée, la deuxième direction de coopération étant transversale à l'axe central.

Ainsi, la deuxième direction de coopération est fixe par rapport à la partie centrale. En d'autres termes, la partie latérale de deuxième type se déplace transversalement par rapport à la partie centrale mais pas longitudinalement. La partie latérale de deuxième type est donc toujours dans le même plan transversal par rapport à la partie centrale et ne peut se déplacer selon l'axe central qu'avec la partie centrale.

Egalement, la partie latérale de premier type ne présente qu'un seul degré de liberté dans ses déplacements par rapport à la partie centrale.

Selon un aspect de l'invention, la partie centrale est agencée pour être mobile selon l'axe central entre une position de moulage et une position rétractée. De préférence, la partie latérale de premier type est agencée pour coopérer de manière surfacique avec la partie centrale selon la première direction de coopération.

Selon un aspect de l'invention, la première direction de coopération est orientée de telle sorte que lorsque la partie centrale est déplacée de la position de moulage à la position rétractée, la partie latérale de premier type se déplace transversalement à l'axe central, de préférence en direction de l'axe central.

Ces dispositions permettent ainsi par des déplacements simples, c'est-à-dire des translations par rapport à la partie centrale, aux parties latérales de passer de leurs positions de moulage à leurs positions rétractées.

La simplicité de ces déplacements a pour avantage de permettre un fonctionnement fiable du système à noyau, les agencements mécaniques entre les pièces restant eux également simples.

Cette simplicité implique aussi des faibles jeux fonctionnels entre les pièces. Ceci est un gage de précision des déplacements entre les positions rétractées et les positions de moulage et permet d'atteindre un nombre important de déplacements avant qu'il soit nécessaire de changer une pièce usée.

Dans le présent texte il est fait référence à des positions de moulage et des positions rétractées. La position de moulage et rétractée de chaque pièce est définie par rapport à une autre pièce exceptée pour la partie centrale. Ainsi une pièce peut être en position de moulage et une autre pièce en position rétractée. Le moulage de la pièce par le système à noyaux rétractables est réalisé lorsque toutes les pièces sont en position de moulage.

Selon un aspect de l'invention, le système à noyaux rétractables comprend en outre un dispositif de guidage de la partie latérale de deuxième type pourvu d'un élément de déplacement agencé pour déplacer entre la position rétractée et la position de moulage la partie latérale de deuxième type.

Selon un aspect de l'invention, le dispositif de guidage comprend en outre un élément d'ajustement pourvu d'une portion de calage agencée pour être disposée entre la partie centrale et la partie latérale de deuxième type et agencée pour être en contact avec la partie latérale de deuxième type, lorsque les parties centrale et latérale de deuxième type sont toutes deux en position de moulage.

La portion de calage permet ainsi, par contact, de maintenir à une position déterminée la partie latérale de deuxième type. L'intérêt est de permettre un alignement des portions de moulage attenantes pour que le motif moulé continu ne présente pas d'irrégularité au niveau de la jointure entre deux portions de moulage attenantes.

Selon un aspect de l'invention, l'élément de déplacement et l'élément d'ajustement sont agencés pour être translatés selon l'axe central entre une position rétractée et une position de moulage, le passage de la position rétractée à la position de moulage des éléments d'ajustement et de déplacement engendrant le déplacement la partie latérale de deuxième type de la position rétractée à la position de moulage, et, le passage de la position de moulage à la position rétractée des éléments d'ajustement et de déplacement engendrant le déplacement la partie latérale de deuxième type de la position de moulage à la position rétractée.

Le déplacement de la partie latérale de deuxième type par l'élément de déplacement et l'ajustement de sa position en position de moulage par l'élément d'ajustement est réalisé par une simple translation des éléments de déplacement et d'ajustement.

Cette disposition permet donc de réaliser deux opérations, le déplacement et l'ajustement, à partir d'un seul mouvement de translation. Cet agencement simple entre les constituants du système à noyaux rétractables implique une précision des déplacements de la partie latérale de deuxième type.

Selon un aspect de l'invention, la portion de calage présente une première surface de contact agencée pour coopérer de manière surfacique avec la partie latérale de deuxième type lorsque la partie latérale de deuxième type se déplace entre la position de moulage et une position intermédiaire, la position intermédiaire de la partie latérale de deuxième type se situant entre la position de moulage et la position rétractée selon la deuxième direction de coopération.

De préférence, la première surface de contact présente une inclinaison par rapport à l'axe central. En particulier, la partie latérale de deuxième type présente une première surface de coopération agencée pour coopérer de manière surfacique avec la première surface de contact de l'élément d'ajustement.

Cette coopération surfacique, de part l'inclinaison des surfaces, permet un déplacement de la partie latérale de deuxième type selon la deuxième direction de coopération.

Selon un aspect de l'invention, la portion de calage présente une deuxième surface de contact agencée pour coopérer de manière surfacique avec la partie centrale lorsque la partie latérale de deuxième type se déplace entre la position de moulage et la position intermédiaire.

De préférence, la deuxième surface de contact présente une inclinaison par rapport à l'axe central. En particulier, la partie centrale présente une deuxième surface de coopération agencée pour coopérer de manière surfacique avec la deuxième surface de contact de l'élément d'ajustement.

Lorsque la partie centrale et la partie latérale de deuxième type sont en position de moulage, la portion de calage se trouve alors en contact surfacique avec la partie centrale et la partie latérale de deuxième type. La portion de calage est donc agencée pour ajuster le positionnement de la partie latérale de deuxième type en position de moulage en réalisant un calage par rapport à la partie centrale.

Selon un aspect de l'invention, les portions de moulage attenantes sont agencées pour engendrer un motif moulé continu sur un contour fermé lorsque l'ensemble de parties latérales et la partie centrale sont en position de moulage.

Le système à noyaux rétractables permet ainsi de rétracter des portions de moulage attenantes formant un contour fermé autour de l'axe central. De préférence le contour s'étend transversalement à l'axe central.

Le fait de disposer d'une partie latérale de premier type et d'une partie latérale de deuxième type, permet de rétracter ces parties indépendamment et donc de rétracter l'ensemble des parties latérales bien que les portions de moulage forment un contour fermé.

Selon un aspect de l'invention, les portions de moulage attenantes présentent au moins une nervure et/ou au moins une rainure lorsque l'ensemble de parties latérales et la partie centrale sont en position de moulage.

Selon un aspect de l'invention, l'au moins une nervure et/ou l'au moins une rainure s'étendent transversalement à l'axe central.

Selon un aspect de l'invention, l'au moins une nervure et/ou l'au moins une rainure sont agencées pour former un filetage autour de l'axe central lorsque l'ensemble de parties latérales et la partie centrale sont en position de moulage.

La partie latérale de premier type et la partie latérale de deuxième type étant agencées pour se rétracter transversalement à l'axe central, des motifs en relief s'étendant transversalement à l'axe central peuvent être engendrés sur la pièce moulée, notamment un filetage.

Selon un aspect de l'invention, le système à noyaux rétractables comprend un moule pourvu d'une première partie dans laquelle sont disposées la partie centrale et l'ensemble des parties latérales, et, d'une deuxième partie dans laquelle est disposé le dispositif de guidage.

Selon un aspect de l'invention, la première partie est une partie mobile alors que la seconde partie est une partie fixe.

Il apparait ainsi que les éléments de déplacement et d'ajustement sont tous deux disposés sur la partie fixe du moule, ce qui leur permet d'être solidaires et fixes lors du mouvement de la partie mobile.

Selon un aspect de l'invention, la première partie et la deuxième partie du moule sont agencées pour être déplacées l'une par rapport à l'autre entre une position rétractée et une position de moulage selon l'axe central.

Selon un aspect de l'invention, la partie centrale est agencée pour être déplacée selon l'axe central par rapport à la deuxième partie de la partie mobile lors de son déplacement entre la position rétractée et la position de moulage.

Cette disposition permet le déplacement transversal par rapport à l'axe central de la partie latérale de premier type lors de son déplacement entre la position de moulage et la position rétractée.

Selon un aspect de l'invention, l'ensemble de parties latérales est constitué d'une alternance de parties latérales de premier type et de parties latérales de deuxième type. De préférence, chaque partie latérale est en regard d'une partie latérale de même type par rapport à l'axe central. Cette disposition permet d'avoir un noyau rétractable de forme symétrique.

Selon un aspect de l'invention, lorsque toutes les pièces du système à noyau rétractable sont en position de moulage, le système est apte à réaliser le moulage d'une pièce.

Suite au moulage, la partie mobile est déplacée de la position de moulage à la position rétractée. Ceci a pour effet, par l'intermédiaire des éléments de déplacement et d'ajustement, de déplacer les parties latérales de deuxième type vers l'axe central selon la deuxième direction de coopération. Les parties latérales de deuxième type sont ainsi en position rétractée.

La partie centrale est ensuite déplacée de la position de moulage à la position rétractée selon l'axe central par rapport à la deuxième partie de la partie mobile. Grâce à la coopération surfacique entre la partie centrale et les parties latérales de premier type, ce déplacement de la partie centrale a pour effet de déplacer les parties latérales de premier type transversalement à l'axe central et vers l'axe central.

De préférence, ce déplacement transversal à l'axe central est compris dans le plan transversal à l'axe central défini par les deuxièmes directions de coopération respectives des parties latérales de deuxième type.

Le déplacement de la partie centrale a également pour effet d'éloigner selon l'axe central, l'ensemble constitué de la partie centrale et des parties latérales de deuxième type de la pièce moulée. Les parties latérales de deuxième type et les parties latérales de premier type se trouvent ainsi décalée selon l'axe central.

L'ensemble des parties latérales est alors en position rétractée et la pièce moulée peut être retirée de la partie mobile.

La présente invention concerne en outre un procédé de moulage d'une pièce, notamment une pièce injectée en matière thermoplastique, comprenant les étapes consistant à :
- disposer d'un système à noyaux rétractables selon l'une des revendications précédentes et d'une machine de moulage apte à coopérer avec le système à noyaux rétractables,
- procéder à l'injection de la pièce avec la machine de moulage, le système à noyaux rétractables étant en une position de moulage dans laquelle la pièce est au moins partiellement disposée autour d'un ensemble de parties latérales du système à noyaux rétractables, les parties latérales étant disposées autour d'un axe central, l'ensemble de parties latérales comprenant au moins une partie latérale d'un premier type agencée pour coopérer avec une partie centrale du système à noyaux rétractables selon une première direction de coopération oblique par rapport à l'axe central, et, au moins une partie latérale d'un deuxième type agencée pour être mobile en translation par rapport à la partie centrale selon une deuxième direction de coopération transversale à l'axe central,
- déplacer l'au moins une partie latérale de deuxième type vers la partie centrale selon la deuxième direction de coopération,
- déplacer la partie centrale selon l'axe central, la coopération entre la partie centrale et l'au moins une partie latérale de premier type engendrant un déplacement de l'au moins une partie latérale de premier type d'abord transversalement à l'axe central puis selon l'axe central.

Cette disposition permet donc d'obtenir des pièces injectées en utilisant le système à noyaux rétractables décrit ci-avant.

Selon un aspect de l'invention, le système à noyaux rétractables comprend deux parties latérales de premier type et deux parties latérales de deuxième type agencées de manière alternée autour de l'axe central.

Cette disposition permet de réduire le nombre de lignes de plan de joint engendrées dans la partie interne de la pièce, chaque ligne de plan de joint correspondant à un plan de coopération entre deux parties latérales attenantes.

La présente invention concerne également une pièce injectée, notamment en matière thermoplastique, présentant une partie interne engendrée par un système à noyaux rétractables lors de l'injection, la partie interne présentant des lignes de plan de joint, chacune correspondant à une ligne de coopération entre deux parties latérales attenantes d'un système à noyaux rétractables engendrant un motif moulé continu, ledit système comprenant quatre parties latérales.

Selon un aspect de l'invention, chaque ligne de plan de joint de ladite pièce injectée est comprise dans un plan. De préférence, deux lignes de plan de joint sont comprises dans un même plan. La pièce injectée est ainsi régulière et présente à la fois peu de lignes de plan de joint. Si la pièce injectée est tubulaire elle sera régulière axialement et radialement.

De toute façon l'invention sera bien comprise à l'aide de la description qui suit en référence aux dessins schématiques annexés représentant, à titre d'exemple non limitatif, une forme d'exécution de ce système à noyau rétractable.
Figure 1 est une vue en perspective de la partie fixe du moule.
Figure 2 est une vue en perspective de la partie mobile du moule..
Figure 3 est une vue éclatée en perspective d'un système à noyaux rétractables.
Figure 4 est une vue en perspective d'un système à noyaux rétractables en une position de moulage.
Figure 5 est une coupe longitudinale par rapport à un axe central du système à noyaux rétractables en position de moulage.
Figure 6 est une coupe longitudinale, selon un plan perpendiculaire à celui de la figure 5, du système à noyaux rétractables en position de moulage.
Figure 7 à 10 sont des coupes longitudinales du système à noyaux rétractables, selon les mêmes plans de coupe que les figures 5 et 6, à différentes étapes de rétractation.

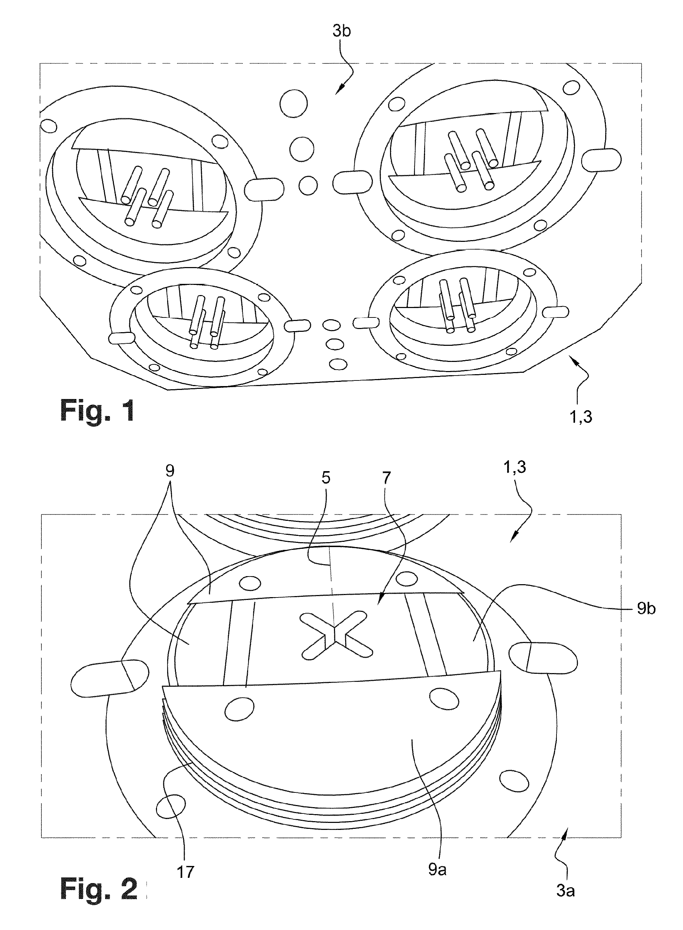

Comme illustré aux figures 1 et 2, un système à noyaux rétractables 1 comprend un moule 3 pourvu d'une partie mobile 3a et d'une partie fixe 3b. La partie mobile 3a et la partie fixe 3b sont agencées pour se déplacer en translation l'une par rapport à l'autre selon un axe central 5.

Le système à noyaux rétractables 1 comprend une partie centrale 7 et un ensemble de partie latérales 9 disposées dans la partie mobile 3a du moule. L'axe central 5 correspond à la direction d'extension de la partie centrale 7.

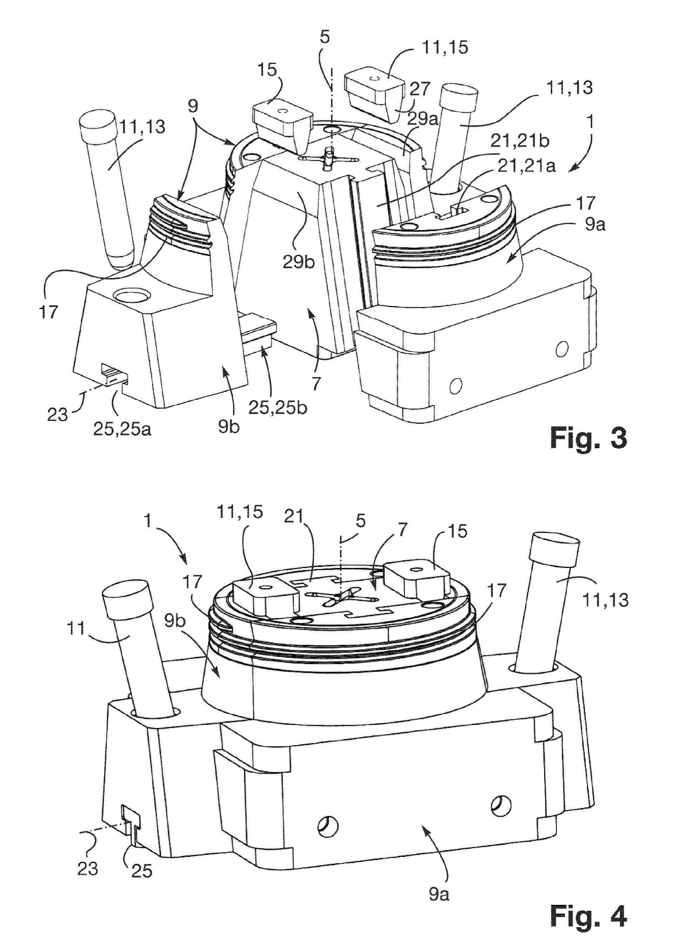

Comme illustré aux figures 3 à 6, le système à noyaux rétractables 1 comprend un dispositif de guidage 11 pourvu d'un élément de déplacement 13 et d'un élément d'ajustement 15. Les éléments de déplacement 13 et d'ajustement 15 sont managés dans la partie fixe du moule 3b. Ainsi les éléments de déplacement 13 et d'ajustement 15 sont solidaires de la partie fixe 3b et sont agencés pour être déplacés en translation avec la partie fixe 3b selon l'axe central 5.

Les parties latérales 9 sont disposées autour de la partie centrale 7 par rapport à l'axe central 5. Chaque partie latérale 9 comprend en outre une portion de moulage 17. Les portions de moulage 17 sont attenantes deux à deux et agencées pour engendrer un motif moulé continu.

Les portions de moulage 17 sont réparties autour de l'axe central 5 de manière à s'étendre selon un contour transversal à l'axe central 5. Les portions de moulage 17 présentent également des nervures 17a et des tenons 17b agencés de manière à engendrer un filetage interne sur une pièce moulée dans le système à noyaux rétractables 1.

L'ensemble de parties latérales 9 est constitué de parties latérales d'un premier type 9a et de parties latérales d'un second type 9b disposées de manière alternée autour de l'axe central 5. Chaque partie latérale 9 d'un type est en regard d'une partie latérale de type identique, par rapport à l'axe central 5.

Chaque partie latérale de premier type 9a coopère de manière surfacique avec la partie centrale 7 selon une première direction de coopération 19 oblique par rapport à l'axe central 5.

La coopération entre la partie centrale 7 et les parties latérales de premier type 9a est réalisée par un premier système à queue d'aronde 21. Le premier système à queue d'aronde 21 comprend une rainure 21 a ménagée dans la partie latérale de premier type et un tenon 21 b disposé sur la partie centrale 7.

Chaque partie latérale de second type 9b est agencée pour être déplacée en translation par rapport à la partie centrale 7 selon une seconde direction de coopération 23 transversale à l'axe central 5.

La coopération entre la partie centrale 7 et les parties latérales de second type 9b est réalisée par un deuxième système à queue d'aronde 25. Le deuxième système à queue d'aronde 25 comprend une rainure 25a ménagée dans la partie latérale de second type 9b et un tenon 25b disposé sur la partie centrale 7.

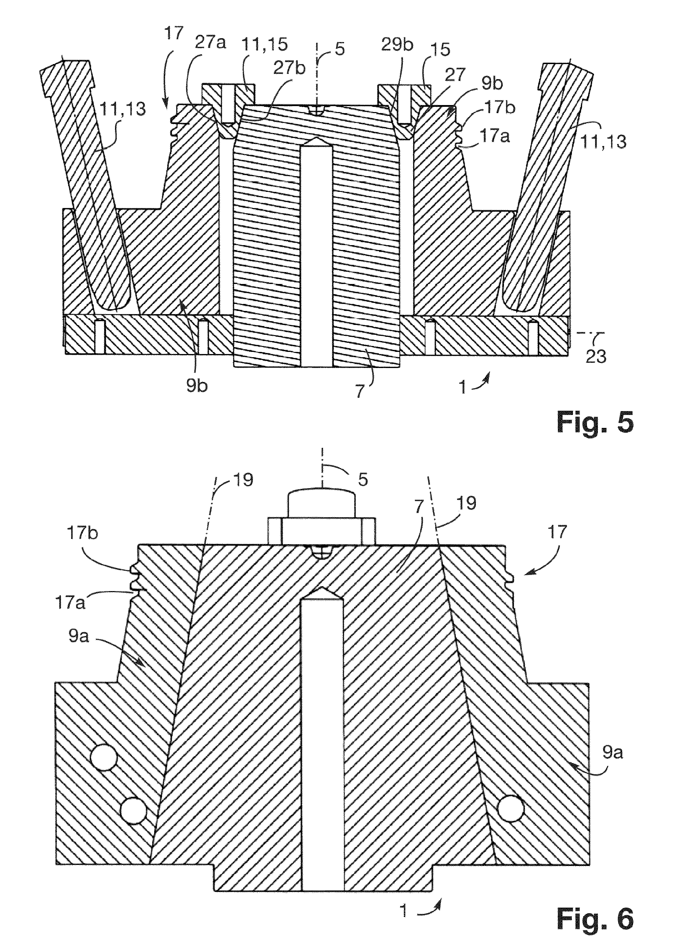

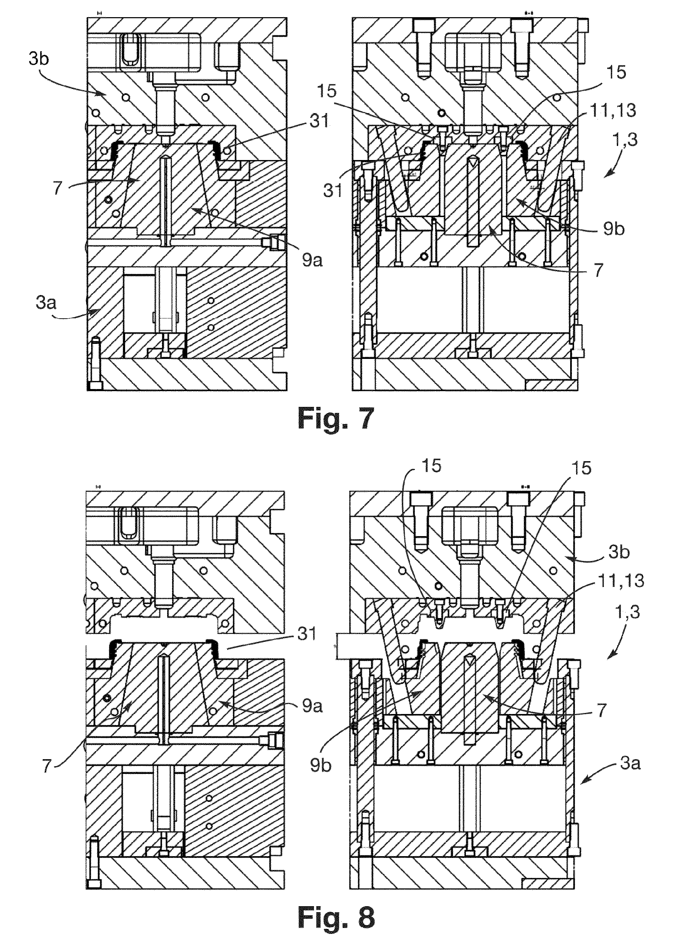

Aux figures 5 et 6, les parties latérales de premier type 9a et les parties latérales de second type 9b sont chacune disposées en une position de moulage. Les parties latérales de premier type 9a et de deuxième type 9b sont agencées pour être déplacées vers une position rétractée comme expliqué plus loin en référence aux figures 7 à 10.

Le dispositif de guidage 11 est agencé pour déplacer et maintenir en position de moulage les parties latérales de second type 9b. A la figure 5 est représentée la position de moulage des parties latérales de second type 9b.

L'élément d'ajustement 15 comprend une portion de calage 27 disposée entre la partie centrale 7 et la partie latérale de second type 9b lorsque la partie latérale de second type 9b est en position de moulage.

La portion de calage 27 comprend une première surface de contact 27a agencée pour coopérer de manière surfacique avec une première surface de coopération 29a de la partie latérale de second type 9b.

La portion de calage 27 comprend également une deuxième surface de contact 27b agencée pour être en contact avec une deuxième surface de coopération 29b de la partie centrale 7.

Nous avons ci-dessus présenté les différents éléments du système à noyaux rétractables 1 et l'agencement des pièces les unes par rapport aux autres. Nous allons maintenant détailler, en référence aux figures 7 à 10, les déplacements des différentes composants du système depuis le moulage d'une pièce jusqu'au retrait des noyaux, par noyaux on entend : ensemble constitué par la partie centrale 7 et les parties latérales 9.

Dans le présent texte, chaque élément du système à noyaux rétractables 1 est défini par rapport aux autres selon deux positions : la position rétractée et la position de moulage dudit élément. Lorsque tous les éléments sont en position de moulage, on dit que le système à noyaux rétractables 1 est en position de moulage.

A la figure 7, le système à noyaux rétractables est en position de moulage. Une pièce 31 peut donc être injectée. La première partie 3a et la deuxième partie 3b du moule sont en contact.

A la figure 8, il s'agit de la première étape de rétractation : la première partie 3a et la seconde partie 3b du moule sont déplacées l'une par rapport à l'autre selon l'axe central 5.

Durant cette étape les parties latérales de premier type 9a restent immobiles. Au contraire, les parties latérales de deuxième type 9b sont déplacées sous l'effet du dispositif de guidage 11.

Au cours de cette étape, l'élément de déplacement 13 engendre un mouvement des parties latérales de deuxième type 9b vers la partie centrale 7 car l'élément de déplacement 13 s'étend de manière oblique par rapport à l'axe central 5. Les parties latérales de deuxième type 9b ne sont ainsi plus en contact avec la pièce moulée 31.

Au moment où le contact entre les éléments de déplacement 13 et les parties latérales de deuxième type 9b cesse, les parties latérales de deuxième type 9b sont en position rétractée. La position des parties latérales de deuxième type 9b par rapport à la partie centrale 7 reste inchangée jusqu'à la fin de la rétractation du noyau, ce qui correspond aux figures 8 à 11.

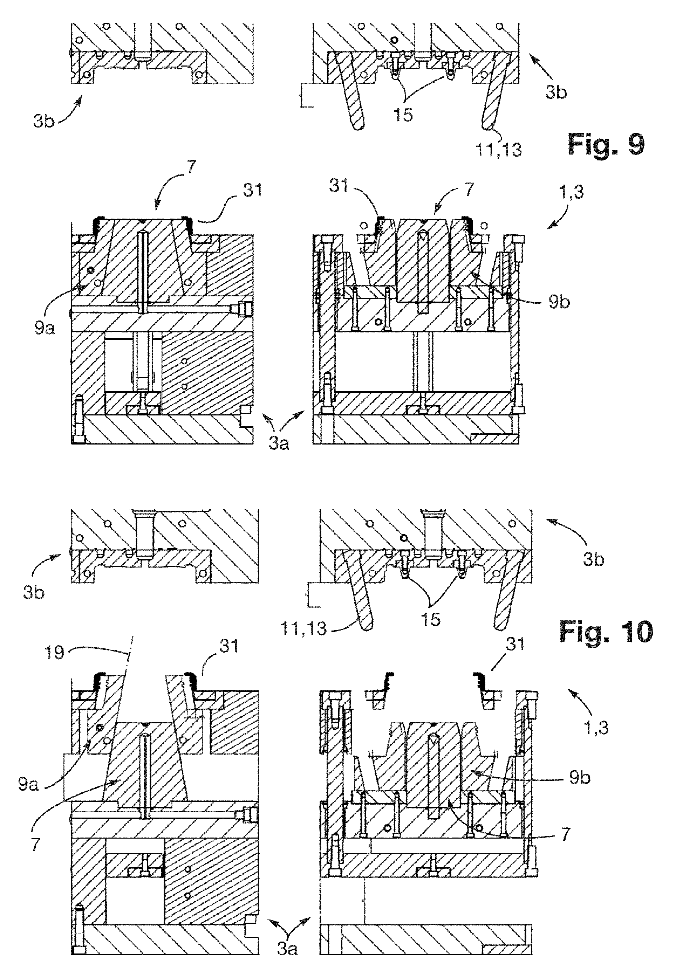

A la figure 9, la première partie du moule 3a et la deuxième partie du moule 3b sont en position rétractée : leur éloignement est maximal. La position relative de la première partie 3a et de la deuxième partie 3b du moule reste inchangée jusqu'à la fin de la rétractation du noyau.

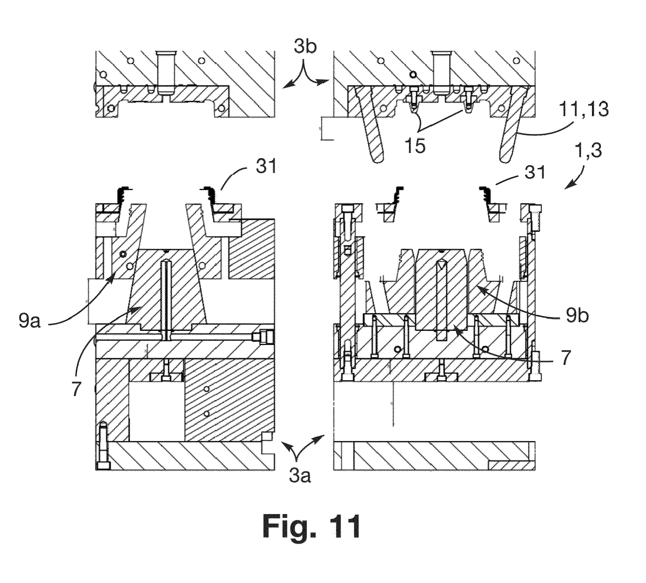

A la figure 10, la partie centrale 7 est déplacée par rapport à la première partie du moule 3a entre sa position de moulage, comme illustré aux figures 7 à 9, et sa position rétractée, comme illustré aux figures 10 et 11.

La partie centrale 7 et les parties latérales de premier type 9a coopérant de manière surfacique, le déplacement de la partie centrale 7 entraine un décalage selon la première direction de coopération 19 entre ces deux éléments.

La première direction de coopération 19 étant oblique par rapport à l'axe central 5, le déplacement de la partie centrale 7 a pour effet de déplacer transversalement à l'axe central 5 les parties latérales de premier type 9b, comme illustré à la figure 10. La pièce moulée 31 n'est ainsi plus en contact avec aucune portion de moulage 17.

A la figure 11, la partie centrale 7 est encore davantage déplacée selon l'axe central 5 pour atteindre sa position rétractée. Durant cette étape la coopération surfacique entre la partie centrale 7 et les parties latérales de premier type 9a est bloquée, par exemple par une butée empêchant un glissement entre la partie centrale 7 et les parties latérales de premier type 9a.

Les parties latérales de premier type 9a présente ainsi leur décalage maximal par rapport à la partie centrale 7 : elles sont en position rétractée.

La coopération surfacique ayant cessée, les parties latérales de premier type 9a se trouvent ainsi déplacées avec la partie centrale 7 selon l'axe central 5. Il apparait ainsi, à la figure 10, que tous les éléments du système à noyaux rétractables 1 sont en position rétractée : le système à noyaux rétractables 1 est donc en position rétractée. La pièce moulée 31, supportée par une portion de la première partie du moule 3a peut donc être retirée.

La pièce moulée 31 obtenue par injection présente une partie interne engendrée par un système à noyaux rétractables 1 lors de l'injection correspondant au motif moulé continu défini par les portions de moulage du système 1.

La partie interne présente quatre lignes de plan de joint s'étendant chacune selon une ligne de coopération entre deux parties latérales attenantes 9a, 9b, cette ligne de coopération étant visible par exemple à la figure 4.

Lorsque la pièce injectée 31 est tubulaire comme à la figure 4, deux lignes de plan de joint opposées sont dans un même plan. La pièce engendrée présente ainsi un nombre réduit de lignes de plan de joint et un aspect régulier.

Pour procéder au moulage suivant, les étapes précédentes peuvent être réalisées dans l'ordre inverse pour que le système à noyaux rétractables 1 retrouve sa position de moulage.

Ce système à noyaux rétractables 1 présente donc des éléments agencés pour être déplacés successivement et à tour de rôle. On passe ainsi de la position de moulage à la position rétractée. Le dispositif de guidage 11 profitant du déplacement de la partie mobile du moule pour déplacer les parties latérales de second type 9b et le déplacement de la partie centrale 7 engendrant le déplacement des parties latérales de premier type 9a, il apparait que seules les parties du moule 3 doivent être déplacées l'une par rapport à l'autre et la partie centrale 7 par rapport à la partie mobile du moule 3a pour rétracter le noyau.

Ces déplacements étant généralement réalisés par des vérins hydrauliques, il apparait, par rapport aux systèmes de rétractation connus, que le nombre de vérins nécessaires a été réduit.

Ceci a pour conséquence de libérer de l'espace à l'intérieur du moule, les vérins y étant habituellement disposés. La place libérée permet par exemple d'agencer de manière plus efficace un système de refroidissement à l'intérieur du moule. Il peut s'agir par exemple par un circuit de circulation d'un fluide de refroidissement.

En outre, l'utilisation d'un nombre limité de vérins réduit les risques de pannes et de casse d'éléments du système à noyaux rétractables 1. En effet, les contrôles à réaliser sur le système sont limités et les pièces à changer pour la maintenance également.

Comme il va de soi, l'invention ne se limite pas à la seule forme d'exécution de ce système à noyau rétractable, décrit ci-dessus à titre d'exemple, elle en embrasse au contraire toutes les variantes de réalisation.

## Revendications

1. Système à noyaux rétractables (1) pour le moulage de pièces (31), notamment des pièces injectées en matière thermoplastique, comprenant :
- une partie centrale (7),
- un ensemble de parties latérales (9) pourvues de portions de moulage (17) attenantes agencées pour engendrer un motif moulé continu sur une pièce (31) autour d'un axe central (5), les parties latérales (9) étant agencées pour être mobiles entre une position de moulage et une position rétractée par rapport à la partie centrale (7) et étant disposées autour de la partie centrale (7) en position de moulage,
l'ensemble de parties latérales (9) comprenant une partie latérale d'un premier type (9a) agencée pour coopérer avec la partie centrale (7) selon une première direction de coopération (19) oblique par rapport à l'axe central (5) entre une position de moulage et une position rétractée ;
l'ensemble de parties latérales (9) comprenant une partie latérale d'un deuxième type (9b) agencée pour être mobile en translation par rapport à la partie centrale (7) selon une deuxième direction de coopération (23) entre une position de moulage et une position rétractée, la deuxième direction de coopération (23) étant transversale à l'axe central (5).

2. Système à noyaux rétractables (1) selon la revendication 1, dans lequel la partie centrale (7) est agencée pour être mobile selon l'axe central (5) entre une position de moulage et une position rétractée.

3. Système à noyaux rétractables (1) selon l'une des revendications précédentes, dans lequel la partie latérale de premier type (9a) est agencée pour coopérer de manière surfacique avec la partie centrale (7) selon la première direction de coopération (19).

4. Système à noyaux rétractables (1) selon l'une des revendications précédentes, comprenant en outre un dispositif de guidage (11) de la partie latérale de deuxième type (9b) pourvu d'un élément de déplacement (13) agencé pour déplacer entre la position rétractée et la position de moulage la partie latérale de deuxième type (9b).

5. Système à noyaux rétractables (1) selon la revendication précédente, dans lequel le dispositif de guidage (11) comprend en outre un élément d'ajustement (15) pourvu d'une portion de calage (27) agencée pour être disposée entre la partie centrale (7) et la partie latérale de deuxième type (9b) et agencée pour être en contact avec la partie latérale de deuxième type (9b), lorsque les parties centrale (7) et latérale de deuxième type(9b) sont toutes deux en position de moulage.

6. Système à noyaux rétractables (1) selon la revendication précédente, dans lequel l'élément de déplacement (13) et l'élément d'ajustement (15) sont agencés pour être translatés selon l'axe central (15) entre une position rétractée et une position de moulage, le passage de la position rétractée à la position de moulage des éléments d'ajustement (15) et de déplacement (13) engendrant le déplacement la partie latérale de deuxième type (9b) de la position rétractée à la position de moulage, et, le passage de la position de moulage à la position rétractée des éléments d'ajustement (15) et de déplacement (13) engendrant le déplacement la partie latérale de deuxième type (9b) de la position de moulage à la position rétractée.

7. Système à noyaux rétractables (1) selon l'une des revendications 5 ou 6, dans lequel la portion de calage (27) présente une première surface de contact (27a) agencée pour coopérer de manière surfacique avec la partie latérale de deuxième type (9b) lorsque la partie latérale de deuxième type (9b) se déplace entre la position de moulage et une position intermédiaire, la position intermédiaire de la partie latérale de deuxième type (9b) se situant entre la position de moulage et la position rétractée selon la deuxième direction de coopération (23).

8. Système à noyaux rétractables (1) selon la revendication précédente, dans lequel la portion de calage (27) présente une deuxième surface de contact (27b) agencée pour coopérer de manière surfacique avec la partie centrale (7) lorsque la partie latérale de deuxième type (9b) se déplace entre la position de moulage et la position intermédiaire.

9. Système à noyaux rétractables (1) selon l'une des revendications précédentes, dans lequel les portions de moulage (17) attenantes présentent au moins une nervure (17a) et/ou au moins une rainure (17b) lorsque l'ensemble de parties latérales (9) et la partie centrale (7) sont en position de moulage.

10. Système à noyaux rétractables (1) selon la revendication précédente, dans lequel l'au moins une nervure (17a) et/ou l'au moins une rainure (17b) s'étendent transversalement à l'axe central (5).

11. Système à noyaux rétractables (1) selon la revendication précédente, dans lequel l'au moins une nervure (17a) et/ou l'au moins une rainure (17b) sont agencées pour former un filetage autour de l'axe central (5) lorsque l'ensemble de parties latérales (9) et la portion centrale (7) sont en position de moulage.

12. Système à noyaux rétractables (1) selon la revendication 4 ou selon l'une des revendications 5 à 11 en combinaison de la revendication 4, comprenant un moule (3) pourvu d'une première partie (3a) dans laquelle sont disposées la partie centrale (7) et l'ensemble des parties latérales (9), et, d'une deuxième partie (3b) dans laquelle est disposé le dispositif de guidage (11).

13. Système à noyaux rétractables (1) selon la revendication 12, dans lequel la première partie (3a) est une partie mobile alors que la seconde partie (3b) est une partie fixe.

14. Procédé de moulage d'une pièce (31), notamment une pièce (31) injectée en matière thermoplastique, comprenant les étapes consistant à :
- disposer d'un système à noyaux rétractables (1) selon l'une des revendications précédentes et d'une machine de moulage apte à coopérer avec le système à noyaux rétractables (1),
- procéder à l'injection de la pièce (31) avec la machine de moulage, le système à noyaux rétractables (1) étant en une position de moulage dans laquelle la pièce (31) est au moins partiellement disposée autour d'un ensemble de parties latérales (9) du système à noyaux rétractables (1), les parties latérales (9) étant disposées autour d'un axe central (5),
l'ensemble de parties latérales (9) comprenant au moins une partie latérale d'un premier type (9a) agencée pour coopérer avec une partie centrale (7) du système à noyaux rétractables (1) selon une première direction de coopération (19) oblique par rapport à l'axe central (5), et, au moins une partie latérale d'un deuxième type (9b) agencée pour être mobile en translation par rapport à la partie centrale (7) selon une deuxième direction de coopération (23) transversale à l'axe central (5),
- déplacer l'au moins une partie latérale de deuxième type (9b) vers la partie centrale (7) selon la deuxième direction de coopération (23),
- déplacer la partie centrale (7) selon l'axe central (5), la coopération entre la partie centrale (7) et l'au moins une partie latérale de premier type (9a) engendrant un déplacement de l'au moins une partie latérale de premier type (9a) d'abord transversalement à l'axe central (5) puis selon l'axe central (5).

15. Pièce (31) injectée, notamment en matière thermoplastique, présentant une partie interne engendrée par un système à noyaux rétractables (1) lors de l'injection, la partie interne présentant des lignes de plan de joint, chacune correspondant à une ligne de coopération entre deux parties latérales attenantes (9a, 9b) d'un système à noyaux rétractables (1) engendrant un motif moulé continu, ledit système comprenant quatre parties latérales.
